# EUROPEAN PATENT SPECIFICATION

(11) **EP 3 340 179 B1**
(45) Date of publication and mention of the grant of the patent: **03.05.2023**
(21) Application number: 17210320.2
(22) Date of filing: 22.12.2017
(51) Int. Cl.: G06T 11/20, G06F 15/02

(54) **FIGURE PLOTTING DEVICE, FIGURE PLOTTING METHOD, AND RECORDING MEDIUM**
ZEICHENGERÄT, METHODE UND AUFZEICHNUNSMEDIUM
APPAREIL ET PROCÉDÉ POUR DESSINER DES FIGURES ET DISPOSITIF D'ENREGISTREMENT

(30) Priority: 26.12.2016 JP 2016250412
(43) Date of publication of application: 27.06.2018
(73) Proprietor: Casio Computer Co., Ltd., Tokyo 151-8543 (JP)
(72) Inventor: OKUMA, Kentaro, Hamura-shi, Tokyo 205-8555 (JP); TANAKA, Hirokazu, Hamura-shi, Tokyo 205-8555 (JP)
(74) Representative: Grünecker Patent- und Rechtsanwälte PartG mbB

(56) References cited:
- EP-A1- 2 781 999
- JP-A- 2013 203 006
- US-A- 5 491 779
- US-A1- 2001 043 211
- US-A1- 2009 073 180
- THOU-HO CHEN ET AL: "A small-size chinese font display by perception-based method", IMAGE PROCESSING, 2004. ICIP '04. 2004 INTERNATIONAL CONFERENCE ON SINGAPORE 24-27 OCT. 2004, PISCATAWAY, NJ, USA,IEEE, vol. 4, 24 October 2004 (2004-10-24), pages 2407-2410, XP010786272, DOI: 10.1109/ICIP.2004.1421586 ISBN: 978-0-7803-8554-2

## Description

The technical field relates to a figure plotting device, a control method for plotting circular cylinders carried out by a figure plotting device, and a non-transitory recording medium having a program recorded thereon to control a figure plotting device.

In the related art, as a method of plotting three-dimensional (3D) figures, there is a method of determining Z coordinates corresponding to coordinates (X, Y) of individual points in an XYZ-coordinate space by a function Z = f(x, y) and plotting the determined coordinates (X, Y, Z) as a 3D graph (see Japanese Patent Application Publication No. 2005-182125 for instance). This method of plotting 3D figures as 3D graphs needs only relatively easy arithmetic processing, and thus can be implemented without requiring a high-speed high-performance processor (CPU), however, it cannot easily plot circular cylinders (including elliptic cylinders), cones (including elliptic cones), spheres (elliptic spheres), and so on.

Also, in the related art, for example, as disclosed in Japanese Patent Application Publication No. 2005-182125, there is a method of modeling the surfaces of 3D figures 3D as sets of polygons (grids). This method can plot every 3D figure and can also perform processing such as shifting, scaling, reversing, and rotating; however, relatively heavy arithmetic processing is required, and a process of plotting a polygon protruding outward from a plotting area determined separately is not particularly disclosed.

Thou-Ho Chen et al: "A small-size Chinese font display by perception-based method", 24 October 2004, XP010786272 relates to enhancing readability when displaying small Chinese characters. For this purpose, the character or part thereof may be shifted and/or its thickness may be alter in order to match a pixel grid of a display.

EP 2 781 999 A1 relates to scrolling on a display showing a graph of a mathematical function, wherein the graph stops at the border of a plotting area.

JP 2013 203006 A and US 2009/073180 A1 relate tc procedures for displaying geometric objects which extend beyond the boundaries of a display area, wherein each point of the geometric shape to be plotted that falls outside the display area is mapped to one or more points within the area.

The invention is defined by the independent claims.

### BRIEF DESCRIPTION OF THE DRAWINGS

The components in the drawings are not necessarily to scale relative to each other.
FIGS. 1A and 1B are front views illustrating the configuration of the external appearance of a figure plotting device 10, FIG 1A is view in the case of implementing a graphing calculator 10F as the figure plotting device 10, and FIG 1B is view in the case of implementing a tablet terminal 10T as the figure plotting device 10, respectively.
FIG. 2 is a block diagram illustrating the electronic circuit configuration of the figure plotting device 10 (10F or 10T).
FIG. 3 is a flow chart illustrating a circular-cylinder plotting process which is performed according to a figure display control program 22a of the figure plotting device 10.
FIG. 4 is a flow chart illustrating a circle plotting process included in the circular-cylinder plotting process of the figure plotting device 10.
FIGS. 5Ato 5D are views illustrating the relation between individual grids constituting a circle and a plotting area Ad when the grids are plotted in the circle plotting process of the figure plotting device 10.
FIGS. 6Ato 6D are views illustrating display operations (a first example) corresponding to user's operations according to the circular-cylinder plotting process of the figure plotting device 10.
FIGS. 7A to 7C are views illustrating display operations (a second example) corresponding to user's operations according to the circular-cylinder plotting process of the figure plotting device 10.
FIGS. 8A to 8C are views illustrating display operations (a third example) corresponding to user's operations according to the circular-cylinder plotting process of the figure plotting device 10.

### DETAILED DESCRIPTION

Hereinafter, embodiments of the present invention will be described with reference to the drawings.

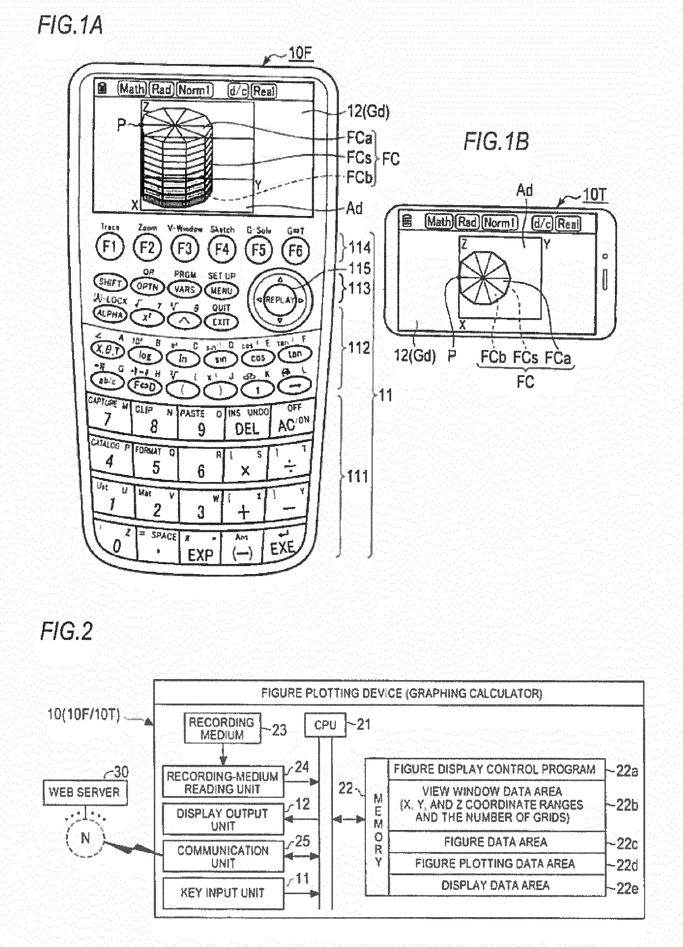

FIGS. 1A and 1B are front views illustrating the configuration of the external appearance of a figure plotting device 10 according to an embodiment, FIG. 1A is view in the case of implementing a graphing calculator 10F as the figure plotting device 10, and FIG. 1B is view in the case of implementing a tablet terminal 10T as the figure plotting device 10, respectively.

As the figure plotting device 10, besides the graphing calculator 10F and the tablet terminal 10T, other devices having a figure plotting function (having a figure display control program) such as a personal computer, a smart phone, a portable phone, a touch panel type personal digital assistant (PDA), an e-book, and a portable game console can be configured.

Also, examples of the figure plotting device 10 like the tablet terminal 10T having no physical keys (buttons) unlike the graphing calculator 10F display a software keyboard similar to keys of the graphing calculator 10F, and performs processing according to key operations on the software keyboard.

The graphing calculator 10F is configured in such a small size that a user can hold it with one hand and operate it with one hand, due to the necessity of portability, and a key input unit 11 and a display output unit (a display unit) 12 are provided on the front surface of the main body of the graphing calculator 10F.

The key input unit 11 includes a number/operation-symbol key group 111 for inputting numerical values or mathematical expressions, or issuing a calculation performance instruction, an arithmetic-function function key group 112 for inputting various arithmetic functions or starting a memory function, a mode setting key group 113 for displaying a menu screen ofvarious operating modes or issuing an operating-mode setting instruction, a function key group 114 for starting various functions displayed along the lower end of the display output unit 12 by one key operation, and a cursor key 115 for performing various operations such as an operation to move a cursor displayed on the display output unit 12 and an operation to select a data item.

As the number/operation-symbol key group 111, "0" to "9" keys (number keys), "+", "-", "×", and ":" keys (keys for addition, subtraction, multiplication, and division), an "EXE" (execution) key, an "AC" (clear) key, and so on are arranged.

As the arithmetic-function function key group 112, an "x²" key (a square key), a "sin" (sine) key, a "cos" (cosine) key, a "tan" (tangent) key, and so on are arranged.

As the mode setting key group 113, a "MENU" (menu) key, and a "SHIFT" (shift) key, an "OPTN" (option) key, and so on are arranged.

As the function key group 114, "F1" to "F6" keys are arranged.

Also, each key of the number/operation-symbol key group 111, the arithmetic-function function key group 112, and the mode setting key group 113 is configured so as to be able to act as a key for a function written above the corresponding key, not a function written on the corresponding key, if the corresponding key is operated after the "SHIFT" key is operated. For example, an operation on the "AC" key after an operation on the "SHIFT' key (hereinafter, referred to as a "SHIFT"+"AC" key) acts as an "OFF" (power-off) key. A "SHIFT"+"MENU" key acts as a "SET UP" (set up) key, and a "SHIFT" + "F3" key acts as a "V-Window" (view window) key (for instructing display of a plotting-area setting screen Gv).

The display output unit 12 is composed of a dot matrix type liquid crystal display unit. Also, the display output unit 12 of the tablet terminal 10T is composed of a liquid crystal display unit superimposed on a touch panel.

FIG. 2 is a block diagram illustrating the electronic circuit configuration of the figure plotting device 10 (10F or 10T).

The electronic circuit of the figure plotting device 10 includes not only the key input unit 11 and the display output unit 12 but also a CPU 21 which is a computer, a memory 22, a recording-medium reading unit 24, and a communication unit 25.

The CPU 21 controls operations of the individual units of the circuit according to the figure display control program 22a stored in the memory 22, thereby performing various calculation processes based on key input signals from the key input unit 11. The figure display control program 22a may be stored in the memory 22 in advance, or may be a program read from an external recording medium 23 such as a memory card through the recording-medium reading unit 13 and stored in the memory 22. Even if the user operates the key input unit 11, the figure display control program 22a is not rewritten.

The memory 22 has an area for storing data which the user can rewrite such as data on mathematical expressions, table data, and graph data, other than such information which the user cannot rewrite. If the user sequentially inputs key code data by operating the keys of the key input unit 11, whereby data is created by the key code data, the created data is stored in that area.

Also, the area of the memory 22 for storing data which the user can rewrite includes a V-Window data area 22b, a figure data area 22c, a figure plotting data area 22d, and a display data area 22e.

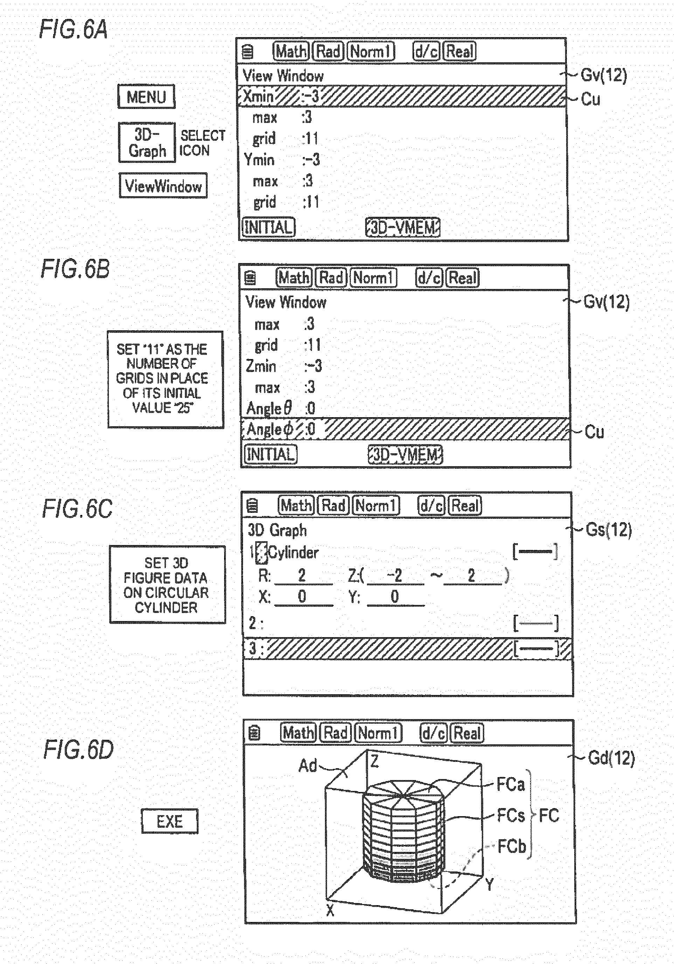

If the user operates the "V-Window" (view window) key, a plotting-area setting screen Gv (see FIGS. 6A and 6B) (here, a plotting-area setting screen Gv for plotting 3D figures) is displayed on the display output unit 12. Then, if the user inputs data on a 3D coordinate plotting area Ad (Xmin, Xmax, Ymin, Ymax, Zmin, and Zmax) for plotting 3D figures and a division number for grids (polygons) by performing operations on the plotting-area setting screen, the input data is stored in the V-Window data area 22b.

If the user operates the "MENU" (menu) key, an operation menu (not shown in the drawings) is displayed, and if the user selects an icon "3D-Graph" for plotting a 3D figure from the operation menu, a 3D graph setting screen Gs (see FIG. 6C) (here, a 3D graph setting screen Gs for plotting a circular cylinder) is displayed on the display output unit 12. Then, if the user inputs data on a 3D figure (plotting data (the radius R, the height Z, and the coordinates X and Y of the center) for modeling the figure with reference to the plotting area Ad) by operating the 3D graph setting screen, the input data is stored in the figure data area 22c.

If arithmetic processing is performed with reference to the plotting area Ad on the basis of the data on the 3D figure stored in the figure data area 22c, plotting data on the 3D figure (the coordinates of the apexes of individual grids (polygonal grids) constituting grid sets to constitute the surfaces of the 3D figure) is generated, and the generated data is stored in the figure plotting data area 22d.

The display data area 22e includes a memory area corresponding to the display size of the liquid crystal display unit constituting the display output unit 12, and in this memory area, display data to be displayed on the liquid crystal display unit is stored as bitmap data (here, bitmap data developed according to the data on the plotting area and the data on the 3D figure).

The CPU 21 controls operations of the individual circuit units according to commands described in the figure display control program 22a such that software and hardware operate in cooperation with each other, whereby the figure plotting device 10 (10F or 10T) configured as described above implements a figure plotting function to be described in the following operation description.

Now, operations according to the figure plotting function of the figure plotting device 10 according to the above-described configuration will be described.

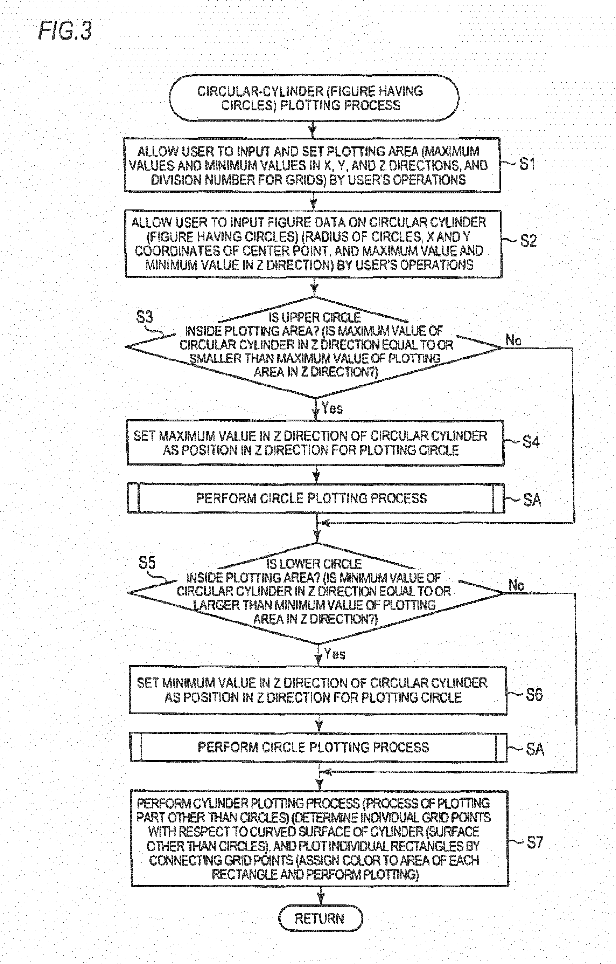

FIG. 3 is a flow chart illustrating a circular-cylinder plotting process which is performed according to the figure display control program 22a of the figure plotting device 10.

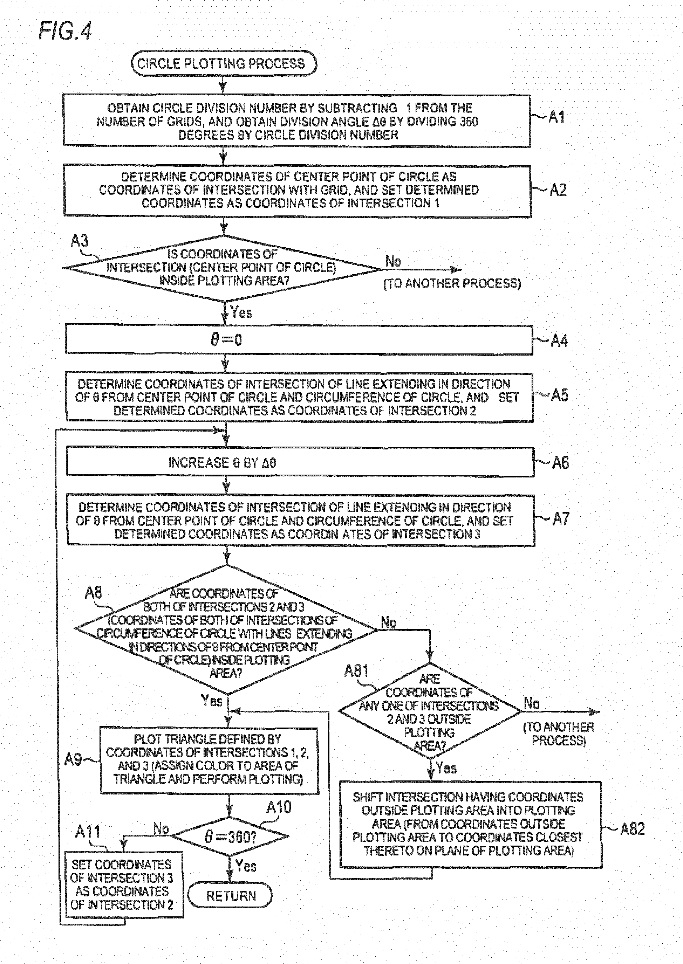

FIG. 4 is a flow chart illustrating a circle plotting process included in the circular-cylinder plotting process of the figure plotting device 10.

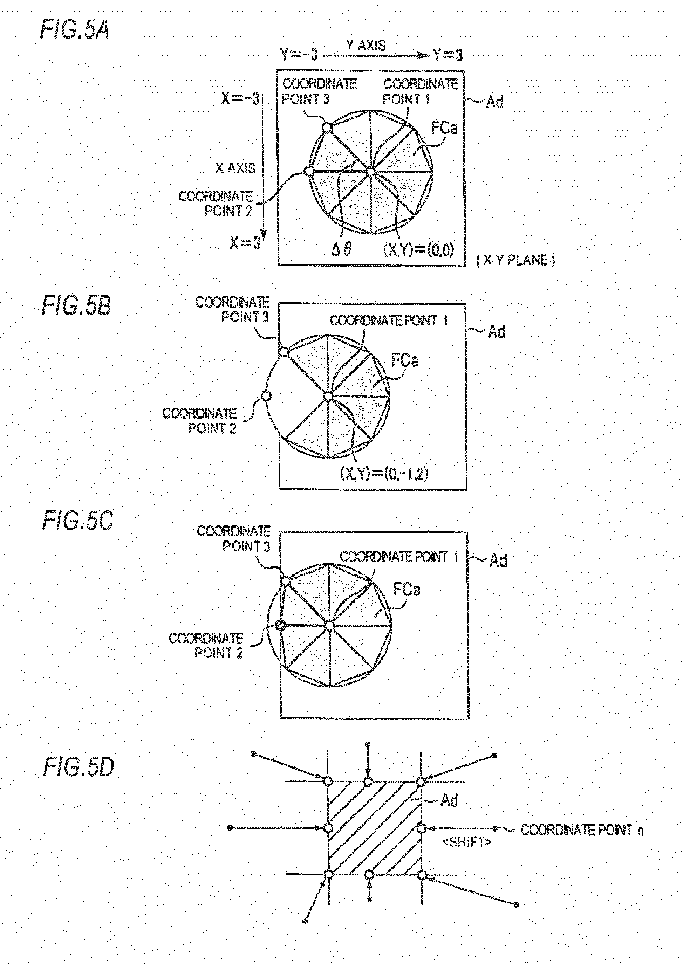

FIGS. 5Ato 5D are views illustrating the relation between individual grids constituting a circle and a plotting area Ad when the grids are plotted in the circle plotting process of the figure plotting device 10.

FIGS. 6A to 8C are views illustrating display operations (first to third examples) corresponding to user's operations according to the circular-cylinder plotting process of the figure plotting device 10.

Now, an overview of the circular-cylinder plotting process will be first described.

In the circular-cylinder plotting process, if the user sets data on a plotting area and data on a 3D figure (a circular cylinder ) according to the plotting-area setting screen Gv and the 3D graph setting screen Gs, a 3D-coordinate string constituting the circumference of one circle (an upper lid) and a 3D-coordinate string constituting the circumference of the other circle (a lower lid) are calculated by arithmetic processing (wherein the circles correspond to the data on the circular cylinder). Also, coordinate strings constituting lines connecting the calculated coordinate string corresponding to the one circle and the calculated coordinate string corresponding to the other circle are calculated as coordinate strings constituting the side surface of the circular cylinder by arithmetic processing.

Thereafter, points of coordinates included in the calculated coordinate string corresponding to the one circle, the calculated coordinate string corresponding to the other circle, and the coordinate strings corresponding to the side surface of the circular cylinder and included in the plotting area are plotted in the order of the one circle, the other circle, and the side surface, whereby the set circular cylinder is displayed.

At this time, with respect to each of the one circle and the other circle, division is performed along radial lines connecting the coordinate point of the center of the corresponding circle with individual coordinate points corresponding to the circumference of the corresponding circle, and lines connecting the individual coordinate points of the circumference of the corresponding circle, whereby a number of triangles are formed, and the set of the formed triangles constitutes the surface of the corresponding circle. Also, with respect to the side surface, division is performed along lines connecting the individual coordinate points corresponding to the circumference of the one circle with the individual coordinate points corresponding to the circumference of the other circle, whereby a number of quadrangles (grids) are formed, and the set of the formed quadrangles (grids) constitutes the surface of the side surface.

However, actually, not all of the calculated coordinate points constituting the one circle and the other circle are plotted. As will be described below, a division number for triangles to constitute each circle and a division number for quadrangles (grids) to constitute the side surface are set. Then, each of the one circle and the other circle is divided into triangles in the radial direction according to the set division number, and the coordinates of the apexes of the individual triangles are determined, and the corresponding circle is plotted. Also, the side surface is divided into quadrangles in horizontal directions (X-Y directions) and vertical directions (Z directions) along vertical lines connecting coordinate points constituting the individual triangles obtained by dividing the one circle and positioned on the circumference of the one circle with coordinate points constituting the individual triangles obtained by dividing the other circle and positioned on the circumference of the other circle and horizontal lines dividing a part between the one circle and the other circle according to the set division number, and the coordinates of the apexes of the individual quadrangles are determined, and the side surface is plotted.

In the circle plotting process, as shown in FIG.
5A to 5D, in the case where a triangle constituting a circle FCa has two coordinate points (coordinate points 2 and 3) positioned on the circumference of the corresponding circle, and any one coordinate point (here, the coordinate point 2) of them is positioned outside the set plotting area Ad (between Xmin "-3" and Xmax "3" and between Ymin "-3" and Ymax "3"), the coordinate point (the coordinate point 2) positioned outside the plotting area is changed to a coordinate point closest thereto and positioned in the plotting area Ad, whereby a triangle (coordinate points 1, 2, and 3) is configured, and a pseudo circle is plotted.

Therefore, in the case where the circle FCa protrudes from the plotting area Ad, it is unnecessary to perform cumbersome and heavy surface processing for precisely fitting the protruding part in the plotting area Ad. Therefore, it is possible to plot a good-looking circular cylinder without using a high-speed high-performance (expensive) processor (CPU).

### (FIRST EXAMPLE)

### <Case where Setting of Circle FCa of Circular Cylinder FC does not protrude from Plotting Area Ad>

As shown in FIG. 6A, if the user operates the "MENU" key such that the operation menu (not shown in the drawings) is displayed, and selects the icon "3D-Graph" for plotting 3D figures, from the displayed operation menu, and operates the "V-Window" key, the plotting-area setting screen Gv for plotting 3D figures is displayed on the display output unit 12.

Then, if the user inputs Xmin "-3", Xmax "3", Ymin "-3", Ymax "3", Zmin "-3", Zmax "3", and a division number "11" for grids (wherein the default of the division number is "25") as data on a 3D coordinate plotting area Ad for plotting 3D figures as shown in FIGS. 6A and 6B by operating the plotting-area setting screen Gv, the input data on the plotting area (Xmin "-3", Xmax "3", Ymin "-3", Ymax "3", Zmin "-3", Zmax "3", and the division number "11" for grids) is stored in the V-Window data area 22b (STEP S1).

Then, as shown in FIG. 6C, a 3D graph setting screen Gs for plotting circular cylinders is displayed on the display output unit 12. If the user inputs data on a circular cylinder by operating the 3D graph setting screen Gs, in other words, if the user inputs "2", "-2", "2", "0", and "0" as the radius R, the minimum value and the maximum value in the height direction (the Z direction), and the X and Y coordinates of the center, respectively, the input data
(the radius R "2", the maximum value "2" and the minimum value "-2" in the height direction (the Z direction), and the X and Y coordinates (0, 0)) on the circular cylinder is stored in the figure data area 22c (STEP S2).

Then, if the user operates the "EXE" key as shown in FIG. 6D, whether the upper circle of the circular cylinder is inside the plotting area Ad is determined according to whether the maximum value (here, "2") in the height direction (the Z direction) defined in the data on the circular cylinder is equal to or smaller than the maximum value (Zmax "3") in the Z direction defined in the data on the plotting area Ad (STEP S3).

In this case, it is determined that the upper circle of the circular cylinder is inside the plotting area Ad ("Yes" in STEP S3), and the maximum value in the Z direction (Z = 2) defined in the data on the circular cylinder is set as a position in the Z direction for plotting the upper circle (STEP S4).

Then, a transition to the circle plotting process of FIG. 4 is performed, and plotting of the upper circle is performed (STEP SA).

In the circle plotting process, first, a number (= 10) for dividing each circle which is a plotting object is obtained by subtracting 1 from the division number for grids (here, "11") defined in the data on the plotting area, and a division angle Δθ (= 36 degrees) is obtained by dividing 360 degrees by the circle division number (= 10) (STEP A1).

Then, the X and Y coordinates (0, 0) of the center defined in the data on the circular cylinder are determined as the coordinates of an intersection 1 with a triangle to constitute the circle which is a plotting object (STEP A2), and whether the coordinates of the intersection 1 (the X and Y coordinates (0, 0) of the center of the circle) is inside a horizontal plotting area (between Xmin "-3" and Xmax "3" and between Ymin "-3" and Ymax "3") defined in the data of the plotting area Ad is determined (STEP A3).

Then, it is determined that the coordinates of the intersection 1 (the X and Y coordinates (0, 0) of the center of the circle) is inside the plotting area (between Xmin "-3" and Xmax "3" and between Ymin "-3" and Ymax "3") ("Yes" in STEP A3), and a variable θ is set to 0 degrees (STEP A4).

Thereafter, the coordinates of an intersection of a line expending in the direction of 0 (= 0 degrees) from the X and Y coordinates (0, 0) of the center of the circle with the circumference of the circle having the radius R (= 2) are determined, and are set as the coordinates of an intersection 2 (STEP A5).

Subsequently, the variable θ is increased to 36 degrees by Δθ (STEP A6), and coordinates of an intersection of a line extending in the direction of θ (= 36 degrees) from the X and Y coordinates (0, 0) of the center of the circle with the circumference of the circle are determined, and are set as the coordinates of an intersection 3 (STEP A7).

Then, whether the coordinates of both of the intersections 2 and 3 of the circumference of the circle with the lines extending in the directions of 0 degrees (= θ) and 36 degrees (= θ) from the X and Y coordinates (0, 0) of the center of the circle are inside the plotting area (between Xmin "-3" and Xmax "3" and between Ymin "-3" and Ymax "3") is determined (STEP A8).

In this case, it is determined that the coordinates of both of the intersections 2 and 3 are inside the plotting area (between Xmin "-3" and Xmax "3" and between Ymin "-3" and Ymax "3") ("Yes" in STEP A8), and a color is assigned to the area of a triangle defined by the coordinates of the intersections I, 2, and 3, and the triangle is plotted in a figure plotting data area 22e (STEP A9).

Then, whether the variable θ (36 degrees) has reached 360 degrees is determined (STEP A 10), and if it is determined that the variable θ has not reached 360 degrees ("No" in STEP A10), the coordinates of the intersection 3 is set as the coordinates of a new intersection 2 (STEP A 11), and processing from STEP A6 is repeated.

In other words, the variable θ is increased to 72 degrees by Δθ (STEP A6), and the coordinates of an intersection of a line extending in the direction of θ (=72 degrees) from the X and Y coordinates (0, 0) of the center of the circle with the circumference of the circle are determined, and are set as the coordinates of a new intersection 3 (STEP A7).

Then, whether the coordinates of both of the intersections 2 and 3 of the circumference of the circle with the lines extending in the directions of 36 degrees (= θ) and 72 degrees (= θ) from the X and Y coordinates (0, 0) of the center of the circle are inside the plotting area (between Xmin "-3" and Xmax "3" and between Ymin "-3" and Ymax "3") are determined (STEP A8), and if it is determined that the coordinates of both of the intersections 2 and 3 are inside the plotting area ("Yes" in STEP A8), and a color is assigned to the area of a triangle defined by the coordinates of the intersections 1, 2, and 3, and the triangle is plotted in the figure plotting data area 22e (STEP A9).

Meanwhile, if it determined that the current variable θ is 72 degrees and has not reached 360 degrees ("No" in STEP A10), the coordinates of the intersection 3 is set as the coordinates of a new intersection 2 (STEP A11), and processing from STEP A6 is repeated again (STEPS A6 to A11).

As a result, as shown in FIG. 6D, in the plotting area Ad (defined by Xmin "-3", Xmax "3", Ymin "-3", Ymax "3", Zmin "-3", and Zmax "3"), the upper circle FCa composed of ten triangles arranged in the circumferential direction is displayed on the display output unit 12.

Then, returning to the circular-cylinder plotting process of FIG. 3 is performed, and whether the lower circle of the circular cylinder is inside the plotting area Ad is determined according to whether the minimum value (here, "-2") in the height direction (the Z direction) defined in the data on the circular cylinder is equal to or larger than the minimum value (Zmin "-3") in the Z direction defined in the data on the plotting area Ad (STEP S5).

In this case, it is determined that the lower circle of the circular cylinder is inside the plotting area Ad ("Yes" in STEP S5), and the minimum value in the Z direction (Z = -2) defined in the data on the circular cylinder is set as a position in the Z direction for plotting the lower circle (STEP S6).

Then, a transition to the circle plotting process of FIG. 4 is performed, and plotting of the lower circle is performed (STEP SA).

In other words, in the circle plotting process, in the same way as the processing of STEPS A1 to A11 of the circle plotting process of plotting the upper circle, , a lower circle FCb composed of ten triangles arranged in the circumferential direction is plotted at a Z direction position (Z = -2) in the plotting area Ad (defined by Xmin "-3", Xmax "3", Ymin "-3", Ymax "3", Zmin "-3", and Zmax "3"), and is displayed on the display output unit 12.

Then, returning to the circular-cylinder plotting process of FIG. 3 is performed, and a side surface FCs of the circular cylinder is plotted between the upper circle FCa and the lower circle FCb. In other words, on the basis of the coordinates of the intersections 2 and 3 constituting the individual triangles of the upper circle FCa and corresponding to the circumference of the upper circle, the coordinates of the intersections 2 and 3 constituting the individual triangles of the lower circle FCb and corresponding to the circumference of the lower circle, and the division number for grids ("11"), coordinate points which are apexes of individual grids (rectangles) obtained as grids to constitute the side surface FCs are determined by performing division into ten partitions in vertical directions and division into ten partitions in horizontal directions, and the determined coordinate points are connected in the vertical directions and the horizontal directions, whereby the individual rectangles are configured, and a color is assigned to the areas of them, and the side surface is plotted in the figure plotting data area 22e (STEP S7).

As a result, as shown in FIG. 6D, a circular cylinder FC (FCa + FCb + FCs) having the X and Y coordinates (0, 0) of the center, the radius R (= 2), and the height (between -2 and 2 in the Z direction) is plotted in the plotting area Ad (defined by Xmin "-3", Xmax "3", Ymin "-3", Ymax "3", Zmin "-3", and Zmax "3"), and is displayed as a 3D figure screen (a display screen) Gd on the display output unit 12.

### (SECOND EXAMPLE)

### <Case where Setting of Circle FCa of Circular Cylinder FC protrudes in Horizontal Direction from Plotting Area Ad>

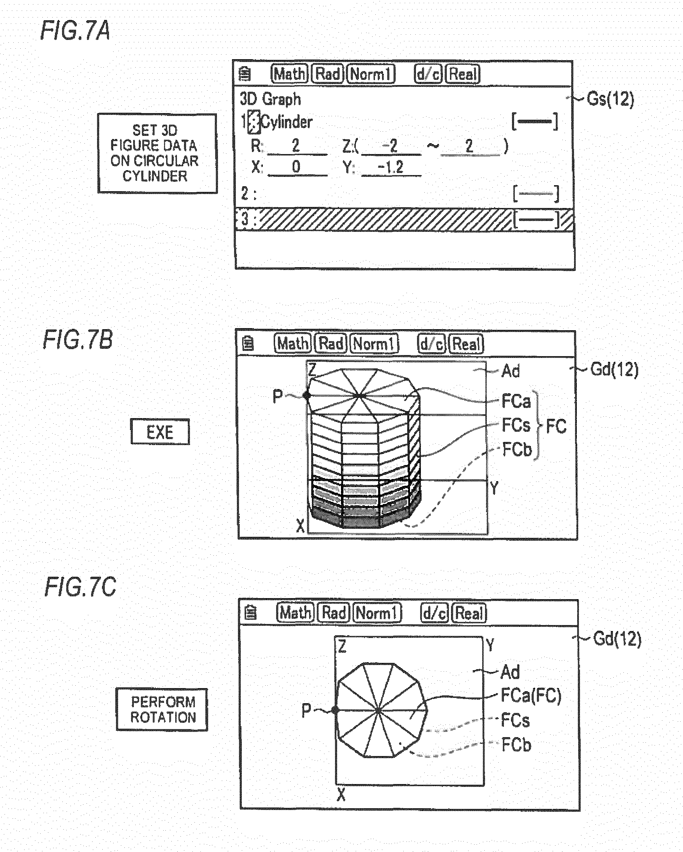

In a second example, the case where the user sets the same plotting area (Xmin "-3", Xmax "3", Ymin "-3", Ymax "3", Zmin "-3", Zmax "3", and the division number for grids "11") as that set according to the plotting-area setting screen Gv shown in FIGS. 6A and 6B, and inputs data on a circular cylinder, i.e. the radius R "2", the minimum value "-2" and the maximum value "2" in the height direction (the Z direction), and the X and Y coordinates (0, -1.2) of the center as shown in FIG. 7Awill be described.

In other words, in a circular-cylinder plotting process of the second example, the circular cylinder is like a circular cylinder obtained by shifting the center of the circular cylinder FC plotted in the first example in the Y direction by -1.2; however, in each of the upper circle plotting process and the lower circle plotting process shown in FIG. 4, for example, in the case where it is assumed that the negative direction of the Y axis is the direction of θ when the variable θ is 0 degrees (or 360 degrees), if it is determined that X and Y coordinates (0, -3.2) of an intersection 2 (or 3) of the circumference of a circle having the radius R (= 2) and a line extending in the direction of θ from the X and Y coordinates (0, -1.2) of an intersection 1 which is the center of the circle are outside the plotting area (between Xmin "-3" and Xmax "3" and between Ymin "-3" and Ymax "3"), processing of STEPS A81 and A82 different from processing in the first example is performed.

Specifically, as shown in FIG. 7B, in the circle plotting process of the upper circle FCa of the circular cylinder FC, the coordinates of an intersection 2 (or 3) which is an intersection P (having X and Y coordinates (0, -3.2)) of the circumference of the circle having the radius R (= 2) with the line extending in the direction of θ (= 0 degrees) from the X and Y coordinates (0, - 1.2) of the intersection 1 which is the center of the circle are determined (STEPS A4 to A7), and it is determined that the coordinates of the intersection 2 (or 3) are outside the plotting area (between Xmin "-3" and Xmax "3" and between Ymin "-3" and Ymax "3") ("Yes" in STEP A81).

Then, the X and Y coordinates of the intersection 2 (or 3) which is the intersection P (having X and Y coordinates (0, -3.2)) determined as being outside the plotting area are shifted to X and Y coordinates (here, (0, -3)) closest thereto and positioned in the plotting area (between Xmin "-3" and Xmax "3" and between Ymin "-3" and Ymax "3") as shown in FIGS. 5B and 5C (STEP A82).

After the coordinates of the intersection 2 (or 3) are shifted to the X and Y coordinates (0, -3) closest thereto and positioned in the plotting area, a color is assigned to the area of a triangle defined by the coordinates of the intersections 1, 2, and 3, and the triangle is plotted (STEP A9).

Subsequently, the other triangles each of which is defined by the coordinates of intersections 1, 2, and 3 wherein the intersection 2 is inside the plotting area Ad are plotted according to the same processing (STEPS A6 to A11) as that of the first example, and as shown in FIG. 7B, the upper circle FCa composed of ten triangles arranged in the circumferential direction is displayed on the display output unit 12.

Also, the circle plotting process of the lower circle FCb of the circular cylinder FC is similar to the circle plotting process of the upper circle FCa, and thus a description thereof will not be made.

Thereafter, similarly in the circular-cylinder plotting process of the first example, a side surface FCs of the circular cylinder is plotted between the upper circle FCa and the lower circle FCb, and a circular cylinder FC (FCa + FCb + FCs) having the X and Y coordinates (0, -1.2) of the center, the radius R (= 2), and the height (between -2 and 2 in the Z direction) is plotted in the plotting area Ad (defined by Xmin "-3", Xmax "3", Ymin "-3", Ymax "3", Zmin "-3", and Zmax "3"), and is displayed on the display output unit 12 (STEP A7).

Therefore, even in the case where the circles FCa and FCb are set to protrude from the plotting area Ad, it is unnecessary to perform cumbersome and heavy surface processing for precisely fitting the protruding part in the plotting area Ad. Therefore, it is possible to plot a good-looking circular cylinder without using a high-speed high-performance (expensive) processor (CPU).

FIG. 7C shows a display state which is obtained by performing a process of rotating the plotted circular cylinder FC shown in FIG. 7B in a planar direction.

Also, in the circular cylinder plotted as shown in FIG. 7B, rectangles of the side surface FCs positioned between two triangles of the upper circle FCa and two triangles of the lower circle FCb including the intersections P which are coordinate points 2 (or 3) shifted into the plotting area Ad have not been plotted for the purpose of convenience; however, they may be plotted.

### (THIRD EXAMPLE)

### <Case where Setting of Circle FCa of Circular Cylinder FC protrudes in Horizontal Direction from Plotting Area Ad and Maximum Value in Height Direction (Z Direction) of Circular Cylinder FC exceeds Maximum Value in Z Direction of Plotting Area Ad>

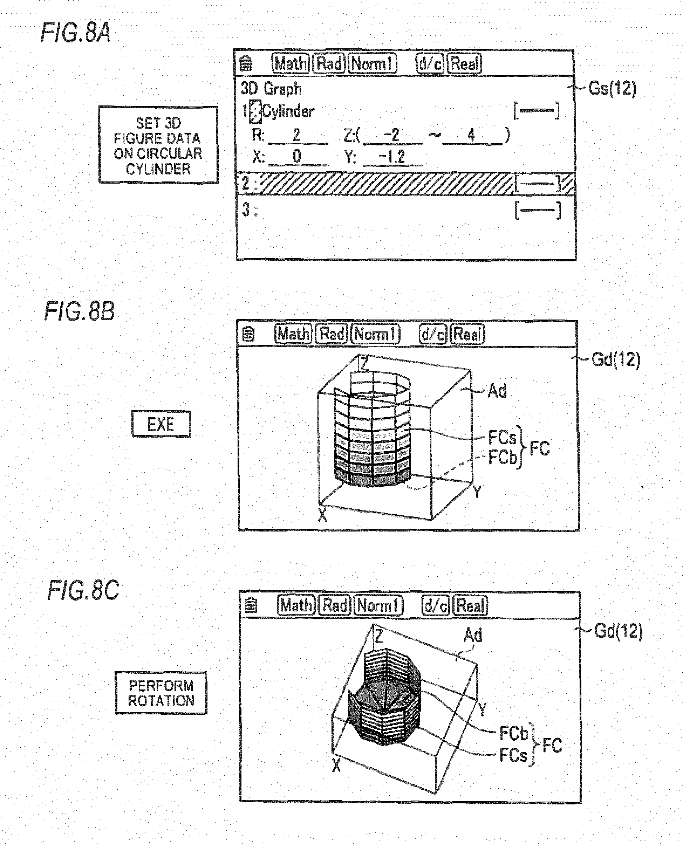

In a third example, the case where the user sets the same plotting area Ad (Xmin "-3", Xmax "3", Ymin "-3", Ymax "3", Zmin "-3", Zmax "3", and the division number for grids "11") as that set according to the plotting-area setting screen Gv shown in FIGS. 6A and 6B, and inputs data on a circular cylinder, i.e. the radius R "2", the minimum value "-2" and the maximum value "4" in the height direction (the Z direction), and the X and Y coordinates (0, -1.2) of the center as shown in FIG. 8A will be described.

In other words, in a circular-cylinder plotting process of the third example, the circular cylinder is like a circular cylinder obtained by shifting the center of the circular cylinder FC plotted in the first example in the Y direction by -1.2 and increasing the height of the circular cylinder FC in the Z direction by "+2" such that a minimum value and a maximum value in the Z direction become -2 and 4, respectively. Therefore, in the circular-cylinder plotting process shown in FIG. 3, it is determined that the upper circle FCa of the circular cylinder is outside the plotting area Ad ("No" in STEP S3).

Therefore, the circle plotting process of the upper circle FCa (STEPS S4 and SA) is not performed.

Further, in the circle plotting process of the lower circle FCb which is performed thereafter, similarly in the second example, the coordinates of an intersection 2 (or 3) which is an intersection P (having X and Y coordinates (0, -3.2)) of the circumference of the circle having the radius R (= 2) with the line extending in the direction of θ (= 0 degrees) from the X and Y coordinates (0, -1.2) of the intersection 1 which is the center of the circle are determined (STEPS A4 to A7), and it is determined that the coordinates of the intersection 2 (or 3) are outside the plotting area (between Xmin "-3" and Xmax "3" and between Ymin "-3" and Ymax "3") ("Yes" in STEP A81).

Then, the X and Y coordinates of the intersection 2 (or 3) which is the intersection P (having X and Y coordinates (0, -3.2)) determined as being outside the plotting area are shifted to X and Y coordinates (here, (0, -3)) closest thereto and positioned in the plotting area (between Xmin "-3" and Xmax "3" and between Ymin "-3" and Ymax "3") as shown in FIGS. 5B and 5C (STEP A82).

After the coordinates of the intersection 2 (or 3) are shifted to the X and Y coordinates (0, -3) closest thereto and positioned in the plotting area, a color is assigned to the area of a triangle defined by the coordinates of the intersections 1, 2, and 3, and the triangle is plotted (STEP A9).

Subsequently, the other triangles each of which is defined by the coordinates of intersections 1, 2, and 3 wherein the intersection 2 is inside the plotting area Ad are plotted according to the same processing (STEPS A6 to A11) as that ofthe second example, and as shown in FIGS. 8B and 8C, the lower circle FCb composed of ten triangles arranged in the circumferential direction is displayed on the display output unit 12.

Thereafter, similarly in the circular-cylinder plotting process described above, the circular cylinder FC (FCb + FCs) having the X and Y coordinates (0, -1.2) ofthe center, the radius R (= 2), and the height (between -2 and 4 in the Z direction) and having no upper circle FCa is plotted in the plotting area Ad (defined by Xmin "-3", Xmax "3", Ymin "-3", Ymax "3", Zmin "-3", and Zmax "3"), and is displayed on the display output unit 12 (STEP A7).

Therefore, even in the case where the circles FCa and FCb are set to protrude in horizontal directions from the plotting area Ad, it is unnecessary to perform cumbersome and heavy surface processing for precisely fitting the protruding parts in the plotting area Ad. Therefore, it is possible to plot a good-looking circular cylinder without using a high-speed high-performance (expensive) processor (CPU).

FIG. 8C shows a display state which is obtained by performing a process of rotating the plotted circular cylinder FC shown in FIG. 8B in a planar direction.

Also, in the circular cylinder plotted as shown in FIGS. 8B and 8C, rectangles of the side surface FCs corresponding to two triangles of the lower circle FCb including a intersection P which is a coordinate point 2 (or 3) shifted into the plotting area Ad have not been plotted for the purpose of convenience; however, they may be plotted.

Therefore, according to the figure plotting device 10 having the above-described configuration, the user sets data on a 3D figure plotting area Ad (Xmin, Xmax, Ymin, Ymax, Zmin, and Zmax) according to the plotting-area setting screen Gv, and inputs plotting data on a circular cylinder FC (the radius R, the height in the Z direction, and the X and Y coordinates of the center) according to the 3D graph setting screen Gs. Then, with respect to each of the circles FCa and FCb of both ends of the circular cylinder FC, the coordinates of individual intersections of the circumference of the corresponding circle with individual lines extending radially from the coordinates of the center of the corresponding circle at intervals of Δθ are determined on the basis of the data on the plotting area Ad and the plotting data on the circular cylinder FC, and a plurality of triangles is formed by connecting the coordinates of the center with the coordinates of each of the intersections and connecting the coordinates of the individual intersections, and the corresponding circle FCa or FCb is plotted by the set of the triangles. Also, with respect to the side surface FCs of the circular cylinder FC, quadrangles (grid areas) are formed by lines connecting the coordinates of the individual intersections determined on the circumference of one circle FCa of the circular cylinder FC with the coordinates of the individual intersections determined on the circumference of the other circle FCb and a plurality of dividing lines parallel to the circles FCa and FCb, and the side surface FCs is plotted by the set of the quadrangles.

Further, in the case of plotting the circle FCa or FCb as the set of the plurality of triangles, if the coordinates of one of two points of a triangle positioned on the circumference of the circle except an apex corresponding to the coordinates of the center of the corresponding circle FCa or FCb is outside of the plotting area Ad set in advance, the coordinates of the corresponding intersection positioned outside the plotting area is shifted to coordinates closest thereto and positioned in the plotting area, and a plurality of triangles is formed by connecting the intersection coordinates including the shifted coordinates, and the circle FCa or FCb is plotted by the set of the formed triangles.

Therefore, even in the case where the plotting data on the circular cylinder is set such that the circles FCa and FCb of the circular cylinder protrude from the plotting area Ad, it is unnecessary to perform cumbersome and heavy surface processing for precisely fitting the protruding parts in the plotting area Ad. Therefore, it is possible to plot a good-looking circular cylinder FC without using a high-speed high-performance (expensive) processor (CPU).

Also, according to the figure plotting device 10 having the above-described configuration, whether the maximum value Zmax and the minimum value Zmin in the height direction (the Z direction) included in the plotting data of the circular cylinder FC are inside the area in the Z direction (between Zmin and Zmax) defined in the data on the plotting area Ad is determined, and if they are inside the plotting area Ad (between Zmin and Zmax), each circle is plotted. In the case where the maximum value Zmax or the minimum value Zmin in the height direction (the Z direction) defined in the plotting data is outside the area in the Z direction (between Zmin and Zmax) defined in the data on the plotting area Ad, the circle positioned outside the area is not plotted.

Therefore, even in the case where one circle of the circular cylinder FC is outside the plotting area Ad, it is unnecessary to perform cumbersome and heavy surface processing, and it is possible to plot a good-looking circular cylinder FC without one circle in the plotting area Ad.

The case of plotting a circular cylinder as a figure having circles has been described; however, according to examples not forming part of the invention, a figure having circles may include elliptic cylinders having ellipses at both ends, cones, elliptic cones, spheres, and elliptic spheres. Further, with respect to these figures having circles, in the case where a coordinate point positioned on the circumference of a circle (an ellipse) is outside a plotting area set in advance, the coordinate point positioned outside the plotting area may be shifted to a coordinate point closest thereto and positioned in the plotting area, and the corresponding circle may be plotted.

Also, in an example not forming part of the invention, the upper surface and the lower surface may not be circular, and may have any other shape which can be formed by connecting a plurality of points. Examples of such a shape include circles and polygons, i.e. shapes which can be formed by connecting points with straight lines or curved lines.

Also, in examples not forming part of the invention, this technology can also be used in the case of plotting side surfaces of circular cylinders and in the case of plotting figures other than circular cylinders. In other words, a plane which is a plotting object included in the figure is divided into two or more predetermined shapes (wherein each predetermined shape is a polygon) each of which can be formed by connecting a plurality of points, such that grids are formed, and a shape which can be formed by connecting the plurality of points (in the case of the polygon, a plurality of apexes (The same is true in the following parentheses)) and the centroid point of the predetermined shape is plotted, whereby the predetermined shape (the polygon) is plotted in a plotting area of a display screen ofthe display unit. On the occasion of plotting the predetermined shape, if at least one of the plurality of points (the plurality of apexes of the polygon) and the centroid point of the predetermined shape is outside the plotting area, another shape different from the predetermined shape (another polygon having a shape different from the shape of the above-mentioned polygon) may be plotted, wherein the another shape can be formed by shifting each point positioned outside the plotting area to a point in the plotting area and connecting the at least one shifted point of the plurality of apexes of the polygon and one or more points, having not been shifted, of the plurality of points of the predetermined shape (the plurality of apexes of the polygon).

Also, all of the methods of the individual processes which are performed by the figure plotting device 10 described, that is, all of the methods of various processes such as the circular-cylinder plotting process shown by the flow chart of FIG. 3 and the circle plotting processes included in the circular-cylinder plotting process and shown by the flow chart of FIG. 4 can be configured as programs executable in a computer, and the programs can be stored in media of external recording devices, such as memory cards (such as ROM cards and RAM cards), magnetic disks (such as floppy (registered as a trade mark) disks and hard disks), optical disks (such as CD-ROMs and DVDs), and semiconductor memories, to distributed. Also, a computer (a CPU) of an electronic device having a display function can read the programs recorded on a medium of an external recording device, and can control operations according to the read programs, thereby implementing the function of plotting figures having circles described in each embodiment, and performing the same processes according to the above-described methods.

Also, data on the programs for realizing the methods may be transmitted in a program code form on a communication network (N), and the program data may be downloaded from a computer device (a program server) connected to the communication network (N), into a storage device of an electronic device having a display function, such that it is possible to realize the above-described function of plotting figures having circles.

## Claims

1. A figure plotting device, comprising
a display unit (12); and
a controller (21) configured to perform following processes:
receiving (S1), by a user, coordinates Xmin, Xmax, Ymin, Ymax, Zmin, Zmax, wherein said coordinates define input regarding a 3D plotting area (Ad) in 3D coordinates XYZ being equal to [Xmin, Xmax] × [Ymin, Ymax] × [Zmin, Zmax];
receiving (S1), by the user, a division number of grids;
receiving (S2), by the user, data about a circular cylinder to be plotted, the data comprising a radius R, coordinates Xc, Yc, Zcmin and Zcmax, wherein the cylinder is defined by (i) the lower circle radius R and coordinates of its center equal to (Xc, Yc, Zcmin), (ii) the upper circle with radius R and coordinates of its center equal to (Xc, Yc, Zcmax) and (iii) the side surface defined by the circumferences of the lower and upper circle;
determining (S3, A2) whether Xmin ≤ Xc ≤ Xmax, Ymin ≤ Yc ≤ Ymax and Zmin ≤ Zcmax ≤ Zmax;
upon negative determination (S3), not plotting the upper circle (FCa);
upon positive determination (S3, A2), setting (S4) variable Z equal to Zcmax and performing (SA) a circle plotting process based on said variable Z in association to the upper circle (FCa);
determining (S5) whether Xmin ≤ Xc ≤ Xmax, Ymin ≤ Yc ≤ Ymax and Zmin ≤ Zcmin ≤ Zmax;
upon negative determination (S5), not plotting the lower circle (FCb);
upon positive determination (S5), setting (S6) variable Z equal to Zcmin and performing (SA) a circle plotting process based on said variable Z in association to the lower circle (FCb);
wherein the circle plotting process (SA) based on variable Z comprises:
setting (A1, A4) a circle division number equal to division number for grids minus 1, a division angle Δθ equal to 360 degrees divided by the circle division number and a variable θ equal to 0 degrees;
setting (A2) intersection 1 equal to the point with coordinates (Xc, Yc, Z);
setting (A5) intersection 3 equal to the intersection of a line in the XY plane expending in the direction of variable θ from the (Xc, Yc, Z) coordinates for a length equal to R;
repeating while variable θ is less than 360 degrees the following steps:
(i) setting (A11) intersection 2 equal to intersection 3;
(ii) increasing (A6) variable θ by division angle Δθ;
(iii) setting (A7) intersection 3 equal to the intersection of a line in the XY plane expending in the direction of variable θ from the (Xc, Yc, Z) coordinates for a length equal to R;
(iv) determining (A8, A81) if intersection 2 or intersection 3 have coordinates outside the plotting area (Ad);
(v-1) if intersection 2 has coordinates outside the plotting area (Ad), determining (A82) the point of the plotting area (Ad) that is closest to intersection 2 and shifting (A82) intersection 2 to said point;
(v-2) if intersection 3 has coordinates outside the plotting area (Ad), determining (A82) the point of the plotting area (Ad) that is closest to intersection 3 and shifting (A82) intersection 3 to said point;
(vi) plotting (A9) the triangle having intersection 1, intersection 2, intersection 3 as vertices and assigning a color to the area of said triangle;
wherein the processes further comprise:
forming (S7) rectangles of a cylinder sider surface (FCs) by using the coordinates of the intersections 2 and intersections 3 of the triangles plotted in the circle plotting process (SA) in association to the upper circle (FCa), and the coordinates of the intersections 2 and 3 of the triangles plotted in the circle plotting process (SA) in association to the lower circle (FCb) as apexes of said rectangles and connecting said apexes in the Z direction;
plotting (S7) said rectangles and assigning a color to the area of each of them.

2. A control method for plotting circular cylinders carried out by a figure plotting device (10) having a display unit (12) and a controller (21), the method comprising:
receiving (S1), by a user, coordinates Xmin, Xmax, Ymin, Ymax, Zmin, Zmax, wherein said coordinates define input regarding a 3D plotting area (Ad) in 3D coordinates XYZ being equal to [Xmin, Xmax] × [Ymin, Ymax] × [Zmin, Zmax];
receiving (S1), by the user, a division number of grids;
receiving (S2), by the user, data about a circular cylinder to be plotted, the data comprising a radius R, coordinates Xc, Yc, Zcmin and Zcmax, wherein the cylinder is defined by (i) the lower circle radius R and coordinates of its center equal to (Xc, Yc, Zcmin), (ii) the upper circle with radius R and coordinates of its center equal to (Xc, Yc, Zcmax) and (iii) the side surface defined by the circumferences of the lower and upper circle;
determining (S3, A2) whether Xmin ≤ Xc ≤ Xmax, Ymin ≤ Yc ≤ Ymax and Zmin ≤ Zcmax ≤ Zmax;
upon negative determination (S3), not plotting the upper circle (FCa);
upon positive determination (S3, A2), setting (S4) variable Z equal to Zcmax and performing (SA) a circle plotting process based on said variable Z in association to the upper circle (FCa);
determining (S5) whether Xmin ≤ Xc ≤ Xmax, Ymin ≤ Yc ≤ Ymax and Zmin ≤ Zcmin ≤ Zmax;
upon negative determination (S5), not plotting the lower circle (FCb);
upon positive determination (S5), setting (S6) variable Z equal to Zcmin and performing (SA) a circle plotting process based on said variable Z in association to the lower circle (FCb);
wherein the circle plotting process (SA) based on variable Z comprises:
setting (A1, A4) a circle division number equal to division number for grids minus 1, a division angle Δθ equal to 360 degrees divided by the circle division number and a variable θ equal to 0 degrees;
setting (A2) intersection 1 equal to the point with coordinates (Xc, Yc, Z);
setting (A5) intersection 3 equal to the intersection of a line in the XY plane expending in the direction of variable θ from the (Xc, Yc, Z) coordinates for a length equal to R;
repeating while variable θ is less than 360 degrees the following steps:
(i) setting (A11) intersection 2 equal to intersection 3;
(ii) increasing (A6) variable θ by division angle Δθ;
(iii) setting (A7) intersection 3 equal to the intersection of a line in the XY plane expending in the direction of variable θ from the (Xc, Yc, Z) coordinates for a length equal to R;
(iv) determining (A8, A81) if intersection 2 or intersection 3 have coordinates outside the plotting area (Ad);
(v-1) if intersection 2 has coordinates outside the plotting area (Ad), determining (A82) the point of the plotting area (Ad) that is closest to intersection 2 and shifting (A82) intersection 2 to said point;
(v-2) if intersection 3 has coordinates outside the plotting area (Ad), determining (A82) the point of the plotting area (Ad) that is closest to intersection 3 and shifting (A82) intersection 3 to said point;
(vi) plotting (A9) the triangle having intersection 1, intersection 2, intersection 3 as vertices and assigning a color to the area of said triangle;
wherein the method further comprises:
forming (S7) rectangles of a cylinder sider surface (FCs) by using the coordinates of the intersections 2 and intersections 3 of the triangles plotted in the circle plotting process (SA) in association to the upper circle (FCa), and the coordinates of the intersections 2 and 3 of the triangles plotted in the circle plotting process (SA) in association to the lower circle (FCb) as apexes of said rectangles and connecting said apexes in the Z direction;
plotting (S7) said rectangles and assigning a color to the area of each of them.

3. A non-transitory recording medium having a program recorded thereon that is executable to control a figure plotting device according to claim 1 to perform the steps of a method according to claim 2.

## Patentansprüche

1. Vorrichtung zum Zeichnen von Figuren, die umfasst:
eine Anzeige-Einheit (12); und
eine Steuerungseinrichtung (21), die so ausgeführt ist, dass sie die folgenden Prozesse durchführt:
Empfangen (S1) von Koordinaten Xmin, Xmax, Ymin, Ymax, Zmin, Zmax durch einen Benutzer, wobei die Koordinaten Eingabe bezüglich eines 3D-Zeichenbereiches (Ad) in 3D-Koordinaten XYZ definieren, die gleich [Xmin, Xmax] x [Ymin, Ymax] × [Zmin, Zmax] sind;
Empfangen (S1) einer Teilungszahl von Gittern durch den Benutzer;
Empfangen (S2) von Daten über einen zu zeichnenden Kreiszylinder durch den Benutzer, wobei die Daten einen Radius R, Koordinaten Xc, Yc, Zcmin sowie Zcmax umfassen, der Zylinder definiert ist durch (i) den Radius R des unteren Kreises und Koordinaten seines Mittelpunktes, die gleich (Xc, Yc, Zemin) sind, (ii) den Radius des oberen Kreises R und Koordinaten seines Mittelpunktes, die gleich (Xc, Yc, Zcmax) sind, sowie (iii) die Seitenfläche, die durch die Umfänge des unteren und des oberen Kreises definiert ist;
Feststellen (S3, A2), ob Xmin ≤ Xc ≤ Xmax, Ymin ≤ Yc ≤ Ymax und Zmin ≤ Zcmax ≤ Zmax;
bei negativer Feststellung (S3) Unterlassen von Zeichnen des oberen Kreises (FCa);
bei positiver Feststellung (S3, A2), Einstellen (S4) von Variable Z gleich Zcmax und Durchführen (SA) eines Prozesses zum Zeichnen eines Kreises auf Basis der Variable Z in Verbindung mit dem oberen Kreis (FCa);
Feststellen (S5), ob Xmin ≤ Xc ≤ Xmax, Ymin ≤ Yc ≤ Ymax und Zmin ≤ Zemin ≤ Zmax;
bei negativer Feststellung (S5) Unterlassen von Zeichnen des unteren Kreises (FCb);
bei positiver Feststellung (S5), Einstellen (S6) von Variable Z gleich Zcmin und Durchführen (SA) eines Prozesses zum Zeichnen eines Kreises auf Basis der Variable Z in Verbindung mit dem unteren Kreis (FCb);
wobei der auf Variable Z basierende Prozess (SA) zum Zeichnen eines Kreises umfasst:
Einstellen (A1, A4) einer Kreisteilungszahl gleich einer Teilungszahl für Gitter minus 1, eines Teilungswinkels Δθ gleich 360° dividiert durch die Kreisteilungszahl und einer Variablen θ gleich 0 °;
Einstellen (A2) von Schnittpunkt 1 gleich dem Punkt mit Koordinaten (Xc, Yc, Z);
Einstellen (A5) von Schnittpunkt 3 gleich dem Schnittpunkt einer Linie in der XY-Ebene, die sich in der Richtung von Variable θ von den (Xc, Yc, Z)-Koordinaten aus über eine Länge gleich R erstreckt;
Wiederholen der folgenden Schritte, solange Variable θ kleiner als 360 ° ist:
(i) Einstellen (A11) von Schnittpunkt 2 gleich Schnittpunkt 3;
(ii) Vergrößern (A6) von Variable θ um Teilungswinkel Δθ;
(iii) Einstellen (A7) von Schnittpunkts 3 gleich dem Schnittpunkt einer Linie in der XY-Ebene, die sich in der Richtung von Variable θ von den (Xc, Yc, Z)-Koordinaten aus über eine Länge gleich R erstreckt;
(iv) Feststellen (A8, A81), ob Schnittpunkt 2 oder Schnittpunkt 3 Koordinaten außerhalb des Zeichenbereiches (Ad) haben;
(v-1) wenn Schnittpunkt 2 Koordinaten außerhalb des Zeichenbereiches (Ad) hat, Bestimmen (A82) des Punktes des Zeichenbereiches (Ad), der Schnittpunkt 2 am nächsten liegt, und Verschieben (A82) von Schnittpunkt 2 an diesen Punkt;
(v-2) wenn Schnittpunkt 3 Koordinaten außerhalb des Zeichenbereiches (Ad) hat, Bestimmen (A82) des Punktes des Zeichenbereiches (Ad), der Schnittpunkt 3 am nächsten liegt, und Verschieben (A82) von Schnittpunkt 3 an diesen Punkt;
(vi) Zeichnen (A9) des Dreiecks mit Schnittpunkt 1, Schnittpunkt 2 und Schnittpunkt 3 als Eckpunkte und Zuweisen einer Farbe zu der Fläche des Dreiecks;
wobei die Prozesse des Weiteren umfassen:
Ausbilden (S7) von Rechtecken einer Zylinder-Seitenfläche (FCs) unter Verwendung der Koordinaten der Schnittpunkte 2 und Schnittpunkte 3 der in dem Prozess (SA) zum Zeichnen eines Kreises in Verbindung mit dem oberen Kreis (FCa) gezeichneten Dreiecke sowie der Koordinaten der Schnittpunkte 2 und 3 der in dem Prozess (SA) zum Zeichnen eines Kreises in Verbindung mit dem unteren Kreis (FCb) gezeichneten Dreiecke, als Eckpunkte der Rechtecke und Verbinden der Eckpunkte in der Z-Richtung;
Zeichnen (S7) der Rechtecke und Zuweisen einer Farbe zu der Fläche jedes der Rechtecke.

2. Steuerungsverfahren zum Zeichnen von Kreiszylindern, das von einer Vorrichtung (10) zum Zeichnen von Figuren durchgeführt wird, die eine Anzeige-Einheit (12) und eine Steuerungseinrichtung (21) aufweist, wobei das Verfahren umfasst:
Empfangen (S1) von Koordinaten Xmin, Xmax, Ymin, Ymax, Zmin, Zmax durch einen Benutzer, wobei die Koordinaten Eingabe bezüglich eines 3D-Zeichenbereiches (Ad) in 3D-Koordinaten XYZ definieren, die gleich [Xmin, Xmax] × [Ymin, Ymax] × [Zmin, Zmax] sind;
Empfangen (S1) einer Teilungszahl von Gittern durch den Benutzer;
Empfangen (S2) von Daten über einen zu zeichnenden Kreiszylinder durch den Benutzer, wobei die Daten einen Radius R, Koordinaten Xc, Yc, Zcmin sowie Zcmax umfassen, der Zylinder definiert ist durch (i) den Radius R des unteren Kreises und Koordinaten seines Mittelpunktes, die gleich (Xc, Yc, Zemin) sind, (ii) den Radius des oberen Kreises R und Koordinaten seines Mittelpunktes, die gleich (Xc, Yc, Zcmax) sind, sowie (iii) die Seitenfläche, die durch die Umfänge des unteren und des oberen Kreises definiert ist;
Feststellen (S3, A2), ob Xmin ≤ Xc ≤ Xmax, Ymin ≤ Yc ≤ Ymax und Zmin ≤ Zcmax ≤ Zmax;
bei negativer Feststellung (S3) Unterlassen von Zeichnen des oberen Kreises (FCa);
bei positiver Feststellung (S3, A2), Einstellen (S4) von Variable Z gleich Zcmax und Durchführen (SA) eines Prozesses zum Zeichnen eines Kreises auf Basis der Variable Z in Verbindung mit dem oberen Kreis (FCa);
Feststellen (S5), ob Xmin ≤ Xc ≤ Xmax, Ymin ≤ Yc ≤ Ymax und Zmin ≤ Zemin ≤ Zmax;
bei negativer Feststellung (S5) Unterlassen von Zeichnen des unteren Kreises (FCb);
bei positiver Feststellung (S5), Einstellen (S6) von Variable Z gleich Zcmin und Durchführen (SA) eines Prozesses zum Zeichnen eines Kreises auf Basis der Variable Z in Verbindung mit dem unteren Kreis (FCb);
wobei der auf Variable Z basierende Prozess (SA) zum Zeichnen eines Kreises umfasst:
Einstellen (A1, A4) einer Kreisteilungszahl gleich einer Teilungszahl für Gitter minus 1, eines Teilungswinkels Δθ gleich 360° dividiert durch die Kreisteilungszahl und einer Variablen θ gleich 0 °;
Einstellen (A2) von Schnittpunkt 1 gleich dem Punkt mit Koordinaten (Xc, Yc, Z);
Einstellen (A5) von Schnittpunkt 3 gleich dem Schnittpunkt einer Linie in der XY-Ebene, die sich in der Richtung von Variable θ von den (Xc, Yc, Z)-Koordinaten aus über eine Länge gleich R erstreckt;
Wiederholen der folgenden Schritte, solange Variable θ kleiner als 360 ° ist:
(i) Einstellen (A11) von Schnittpunkt 2 gleich Schnittpunkt 3;
(ii) Vergrößern (A6) von Variable θ um Teilungswinkel Δθ;
(iii) Einstellen (A7) von Schnittpunkts 3 gleich dem Schnittpunkt einer Linie in der XY-Ebene, die sich in der Richtung von Variable θ von den (Xc, Yc, Z)-Koordinaten aus über eine Länge gleich R erstreckt;
(iv) Feststellen (A8, A81), ob Schnittpunkt 2 oder Schnittpunkt 3 Koordinaten außerhalb des Zeichenbereiches (Ad) haben;
(v-1) wenn Schnittpunkt 2 Koordinaten außerhalb des Zeichenbereiches (Ad) hat, Bestimmen (A82) des Punktes des Zeichenbereiches (Ad), der Schnittpunkt 2 am nächsten liegt, und Verschieben (A82) von Schnittpunkt 2 an diesen Punkt;
(v-2) wenn Schnittpunkt 3 Koordinaten außerhalb des Zeichenbereiches (Ad) hat, Bestimmen (A82) des Punktes des Zeichenbereiches (Ad), der Schnittpunkt 3 am nächsten liegt, und Verschieben (A82) von Schnittpunkt 3 an diesen Punkt;
(vi) Zeichnen (A9) des Dreiecks mit Schnittpunkt 1, Schnittpunkt 2 und Schnittpunkt 3 als Eckpunkte und Zuweisen einer Farbe zu der Fläche des Dreiecks;
wobei das Verfahren des Weiteren umfasst:
Ausbilden (S7) von Rechtecken einer Zylinder-Seitenfläche (FCs) unter Verwendung der Koordinaten der Schnittpunkte 2 und Schnittpunkte 3 der in dem Prozess (SA) zum Zeichnen eines Kreises in Verbindung mit dem oberen Kreis (FCa) gezeichneten Dreiecke sowie der Koordinaten der Schnittpunkte 2 und 3 der in dem Prozess (SA) zum Zeichnen eines Kreises in Verbindung mit dem unteren Kreis (FCb) gezeichneten Dreiecke, als Eckpunkte der Rechtecke und Verbinden der Eckpunkte in der Z-Richtung;
Zeichnen (S7) der Rechtecke und Zuweisen einer Farbe zu der Fläche jedes der Rechtecke.

3. Nichtflüchtiges Aufzeichnungsmedium, auf dem ein Programm aufgezeichnet ist, das ausgeführt werden kann, um eine Vorrichtung zum Zeichnen von Figuren nach Anspruch 1 zum Durchführen der Schritte eines Verfahrens nach Anspruch 2 zu steuern.

## Revendications

1. Dispositif de traçage de figure, comprenant
une unité d'affichage (12) ; et
une unité de commande (21) configurée pour effectuer les processus suivants :
recevoir (S1), par un utilisateur, des coordonnées Xmin, Xmax, Ymin, Ymax, Zmin, Zmax, où lesdites coordonnées définissent une entrée concernant une zone de traçage 3D (Ad) dans des coordonnées 3D XYZ qui sont égales à [Xmin, Xmax] × [Ymin, Ymax] × [Zmin, Zmax] ;
recevoir (S1), par l'utilisateur, un nombre de division de grilles ;
recevoir (S2), par l'utilisateur, des données concernant un cylindre circulaire à tracer, les données comprenant un rayon R, des coordonnées Xc, Yc, Zcmin et Zcmax, où le cylindre est défini par (i) le cercle inférieur de rayon R et de coordonnées de son centre égales à (Xc, Yc, Zcmin), (ii) le cercle supérieur de rayon R et de coordonnées de son centre égales à (Xc, Yc, Zcmax) et (iii) la surface latérale définie par les circonférences du cercle inférieur et du cercle supérieur ;
déterminer (S3, A2) si Xmin ≤ Xc ≤ Xmax, Ymin ≤ Yc ≤ Ymax et Zmin ≤ Zcmax ≤ Zmax ;
en cas de détermination négative (S3), ne pas tracer le cercle supérieur (FCa) ;
en cas de détermination positive (S3, A2), fixer (S4) la variable Z égale à Zcmax et effectuer (SA) un processus de traçage de cercle basé sur ladite variable Z en association avec le cercle supérieur (FCa) ;
déterminer (S5) si Xmin ≤ Xc ≤ Xmax, Ymin ≤ Yc ≤ Ymax et Zmin ≤ Zcmin ≤ Zmax ;
en cas de détermination négative (S5), ne pas tracer le cercle inférieur (FCb) ;
en cas de détermination positive (S5), fixer (S6) la variable Z égale à Zcmin et effectuer (SA) un processus de traçage de cercle basé sur ladite variable Z en association avec le cercle inférieur (FCb) ;
dans lequel le processus de traçage de cercle (SA) basé sur la variable Z comprend :
fixer (A1, A4) un nombre de division de cercle égal au nombre de division pour les grilles moins 1, un angle de division Δθ égal à 360 degrés divisé par le nombre de division de cercle et une variable θ égale à 0 degré ;
fixer (A2) l'intersection 1 égale au point de coordonnées (Xc, Yc, Z) ;
fixer (A5) l'intersection 3 égale à l'intersection d'une droite dans le plan XY s'étendant dans la direction de la variable θ à partir des coordonnées (Xc, Yc, Z) pour une longueur égale à R ;
répéter, pendant que la variable θ est inférieure à 360 degrés, les étapes suivantes :
(i) fixer (A11) l'intersection 2 égale à l'intersection 3 ;
(ii) augmenter (A6) la variable θ de l'angle de division Δθ ;
(iii) fixer (A7) l'intersection 3 égale à l'intersection d'une droite dans le plan XY s'étendant dans la direction de la variable θ à partir des coordonnées (Xc, Yc, Z) pour une longueur égale à R ;
(iv) déterminer (A8, A81) si l'intersection 2 ou l'intersection 3 ont des coordonnées en dehors de la zone de traçage (Ad) ;
(v-1) si l'intersection 2 a des coordonnées en dehors de la zone de traçage (Ad), déterminer (A82) le point de la zone de traçage (Ad) qui est le plus proche de l'intersection 2 et déplacer (A82) l'intersection 2 vers ledit point ;
(v-2) si l'intersection 3 a des coordonnées en dehors de la zone de traçage (Ad), déterminer (A82) le point de la zone de traçage (Ad) qui est le plus proche de l'intersection 3 et déplacer (A82) l'intersection 3 vers ledit point ;
(vi) tracer (A9) le triangle ayant l'intersection 1, l'intersection 2, l'intersection 3 comme sommets et attribuer une couleur à l'aire dudit triangle ;
dans lequel les processus comprennent en outre :
former (S7) des rectangles d'une surface latérale de cylindre (FCs) en utilisant les coordonnées des intersections 2 et des intersections 3 des triangles tracés dans le processus de traçage de cercle (SA) en association avec le cercle supérieur (FCa), et les coordonnées des intersections 2 et 3 des triangles tracés dans le processus de traçage de cercle (SA) en association avec le cercle inférieur (FCb) en tant que sommets desdits rectangles et en reliant lesdits sommets dans la direction Z ;
tracer (S7) lesdits rectangles et attribuer une couleur à l'aire de chacun d'eux.

2. Procédé de commande pour tracer des cylindres circulaires mis en oeuvre par un dispositif de traçage de figure (10) ayant une unité d'affichage (12) et une unité de commande (21), le procédé comprenant :
recevoir (S1), par un utilisateur, des coordonnées Xmin, Xmax, Ymin, Ymax, Zmin, Zmax, où lesdites coordonnées définissent une entrée concernant une zone de traçage 3D (Ad) dans des coordonnées 3D XYZ qui sont égales à [Xmin, Xmax] × [Ymin, Ymax] × [Zmin, Zmax] ;
recevoir (S1), par l'utilisateur, un nombre de division de grilles ;
recevoir (S2), par l'utilisateur, des données concernant un cylindre circulaire à tracer, les données comprenant un rayon R, des coordonnées Xc, Yc, Zcmin et Zcmax, où le cylindre est défini par (i) le cercle inférieur de rayon R et de coordonnées de son centre égales à (Xc, Yc, Zcmin), (ii) le cercle supérieur de rayon R et de coordonnées de son centre égales à (Xc, Yc, Zcmax) et (iii) la surface latérale définie par les circonférences du cercle inférieur et du cercle supérieur ;
déterminer (S3, A2) si Xmin ≤ Xc ≤ Xmax, Ymin ≤ Yc ≤ Ymax et Zmin ≤ Zcmax ≤ Zmax ;
en cas de détermination négative (S3), ne pas tracer le cercle supérieur (FCa) ;
en cas de détermination positive (S3, A2), fixer (S4) la variable Z égale à Zcmax et effectuer (SA) un processus de traçage de cercle basé sur ladite variable Z en association avec le cercle supérieur (FCa) ;
déterminer (S5) si Xmin ≤ Xc ≤ Xmax, Ymin ≤ Yc ≤ Ymax et Zmin ≤ Zcmin ≤ Zmax ;
en cas de détermination négative (S5), ne pas tracer le cercle inférieur (FCb) ;
en cas de détermination positive (S5), fixer (S6) la variable Z égale à Zcmin et effectuer (SA) un processus de traçage de cercle basé sur ladite variable Z en association avec le cercle inférieur (FCb) ;
dans lequel le processus de traçage de cercle (SA) basé sur la variable Z comprend :
fixer (A1, A4) un nombre de division de cercle égal au nombre de division pour les grilles moins 1, un angle de division Δθ égal à 360 degrés divisé par le nombre de division de cercle et une variable θ égale à 0 degré ;
fixer (A2) l'intersection 1 égale au point de coordonnées (Xc, Yc, Z) ;
fixer (A5) l'intersection 3 égale à l'intersection d'une droite dans le plan XY s'étendant dans la direction de la variable θ à partir des coordonnées (Xc, Yc, Z) pour une longueur égale à R ;
répéter, pendant que la variable θ est inférieure à 360 degrés, les étapes suivantes :
(i) fixer (A11) l'intersection 2 égale à l'intersection 3 ;
(ii) augmenter (A6) la variable θ de l'angle de division Δθ ;
(iii) fixer (A7) l'intersection 3 égale à l'intersection d'une droite dans le plan XY s'étendant dans la direction de la variable θ à partir des coordonnées (Xc, Yc, Z) pour une longueur égale à R ;
(iv) déterminer (A8, A81) si l'intersection 2 ou l'intersection 3 ont des coordonnées en dehors de la zone de traçage (Ad) ;
(v-1) si l'intersection 2 a des coordonnées en dehors de la zone de traçage (Ad), déterminer (A82) le point de la zone de traçage (Ad) qui est le plus proche de l'intersection 2 et déplacer (A82) l'intersection 2 vers ledit point ;
(v-2) si l'intersection 3 a des coordonnées en dehors de la zone de traçage (Ad), déterminer (A82) le point de la zone de traçage (Ad) qui est le plus proche de l'intersection 3 et déplacer (A82) l'intersection 3 vers ledit point ;
(vi) tracer (A9) le triangle ayant l'intersection 1, l'intersection 2, l'intersection 3 comme sommets et attribuer une couleur à l'aire dudit triangle ;
dans lequel le procédé comprend en outre :
former (S7) des rectangles d'une surface latérale de cylindre (FCs) en utilisant les coordonnées des intersections 2 et des intersections 3 des triangles tracés dans le processus de traçage de cercle (SA) en association avec le cercle supérieur (FCa), et les coordonnées des intersections 2 et 3 des triangles tracés dans le processus de traçage de cercle (SA) en association avec le cercle inférieur (FCb) en tant que sommets desdits rectangles et en reliant lesdits sommets dans la direction Z ;
tracer (S7) lesdits rectangles et attribuer une couleur à l'aire de chacun d'eux.

3. Support d'enregistrement non transitoire sur lequel est enregistré un programme qui est exécutable pour commander un dispositif de traçage de figure selon la revendication 1 pour effectuer les étapes d'un procédé selon la revendication 2.
